# EUROPEAN PATENT SPECIFICATION

(11) **EP 1 206 360 B1**
(45) Date of publication and mention of the grant of the patent: **09.04.2003**
(21) Application number: 00944460.5
(22) Date of filing: 20.07.2000
(51) Int. Cl.: B60G 17/005, B60G 21/05, B60G 9/00, B62D 9/02

(54) **VEHICLE WITH STABILITY ARRANGEMENT FOR MOVING STRUCTURAL COMPONENTS**
FAHRZEUG MIT STABILITÄTSANORDNUNG ZUM BEWEGEN VON BAUTEILEN
VEHICULE AVEC DISPOSITIF DE STABILISATION DESTINE AU DEPLACEMENT DE COMPOSANTS STRUCTURAUX

(30) Priority: 27.07.1999 NL 1012714
(43) Date of publication of application: 22.05.2002
(73) Proprietor: Stabilex, 2508 DH Den Haag (NL); Bakker, Bob, 2518 XJ Den Haag (NL)
(72) Inventor: BAKKER, Bob, NL-2518 XJ Den Haag (NL)
(86) International application number: NL0000430
(87) International publication number: WO01007275

(56) References cited:
- EP-A- 0 796 749
- DE-A- 4 030 167
- DE-A- 19 704 498
- DE-U- 1 862 953
- FR-A- 1 244 338
- US-A- 2 045 028
- US-A- 2 643 897
- US-A- 3 717 104
- US-A- 4 324 187
- US-A- 4 741 413
- PATENT ABSTRACTS OF JAPAN vol. 1997, no. 08, 29 August 1997 (1997-08-29) & JP 09 104213 A (SUZUKI MOTOR CORP), 22 April 1997 (1997-04-22)

## Description

The invention is related to a vehicle comprising a stabiliser device for both static and dynamic stabilisation of structural components, which device consists of at least two connection rods connected by hinges with structural components.

Such a device is published in WO 97/21583. This known device is used for stabilising a vehicle when it follows a curved trajectory while driven on a road. The mainly vertically directed steering rod is connected by hinges with the two structural components which are situated above each other and lie mainly on horizontal planes. When the steering rod leans sideways, the structural components will move in opposite directions, parallel to the plane in which the steering rod is moved. However, they will remain on planes that are parallel to each other.

The structural components are connected with hinges to wheel suspension units by means of rods in such a manner that the wheels will take on a slanting position when the steering rod starts leaning sideways. When the steering rod leans, the wheels will also be rotated in such a manner, that the vehicle begins to enter into a turn.

Such a device has a complicated construction and has structural limitations. This is especially so when it is desirable to also drive the particular wheels. FR-A-1 244 338 discloses a vehicle according to the preamble of claim 1.

The invention intends to cancel the drawbacks of the prior art and is furthermore precisely described in claim 1, of the claims section of this application.

Now, when the one structural component is moved in relation to the other, in a direction coinciding with the plane on which the connecting rods are positioned, the one structural component will start making a tilting movement in relation to the other. The lower structural component can be directly connected to the wheel suspension units. The other component will be positioned above and parallel to the first component when the vehicle is going straight forward, so that the connecting rods form isosceles triangles with the structural components. When the vehicle makes a turn, this other component can move laterally and take on a slanting position. The centripetal force can be compensated for in this way while the wheels remain almost square to the road surface.

In particular, at least two sets of connecting rods will have to be used, positioned on planes parallel to each other.

This will prevent relatively large curving moments from being exerted on the hinge shafts between the connecting rods and the structural components.

In order to keep the structural components in a position parallel to each other, tension springs in particular can be used.

For vehicles it is advantageous that the position of the one structural component is directed in relation to the other one depending on the steering deflection.

To this end, the structural components can be connected to each other, for example, by a hydraulic cylinder, which is steered by devices connected to the steering installation.

In this manner, bothersome centrifugal forces, which occur when going into a curve, are compensated for. This improves the comfort of driving.

Especially in the case of a motor vehicle, it can be provided that the plane square to the hinge shafts with which two connecting rods, that cross each other form an angle with the vertical plane.

When the structural components now move in relation to each other, the wheel axles connected to them will make a certain twist on a plane parallel to the road surface. The wheels connected to the axles will be able to start turning in the direction desired when taking a turn.

According to a more detailed elaboration of the invention, the connecting rods can be made up of hydraulic cylinders. For example, these can then serve as shock absorbers, but can also be operable so that the structural components can be put into a certain position in relation to each other. In that case, installation of a separate hydraulic cylinder, as described above, can be omitted.

In order to obtain a shock-absorbing action, it can also be provided that the hinge shafts, which form the connection between the structural components and the connecting rods, are movable in relation to the structural components, diagonal to their longitudinal direction over a certain distance, and are pushed or pulled to a certain final position by means of a spring. This can prevent a jerking movement of the structural components in relation to each other.

The invention is illustrated in more detail in the drawings, in which:
Fig. 1 shows a schematic example of implementation of a device according to the invention;
Fig 2 shows a schematic side view of the bicycle cart provided with a device according to the invention, showing the part of the bicycle to which the cart is connected;
Fig. 3 shows a schematic rear view of the bicycle cart in fig. 2, in which the main plane of the bicycle to which it can be connected is indicated with the line II-II;
Fig. 4 shows a view according to fig. 3, but in which the bicycle is taking a turn; and
Fig. 5 shows a view according to fig. 3, but in which the bicycle is standing on a road sloping in a crosswise direction.

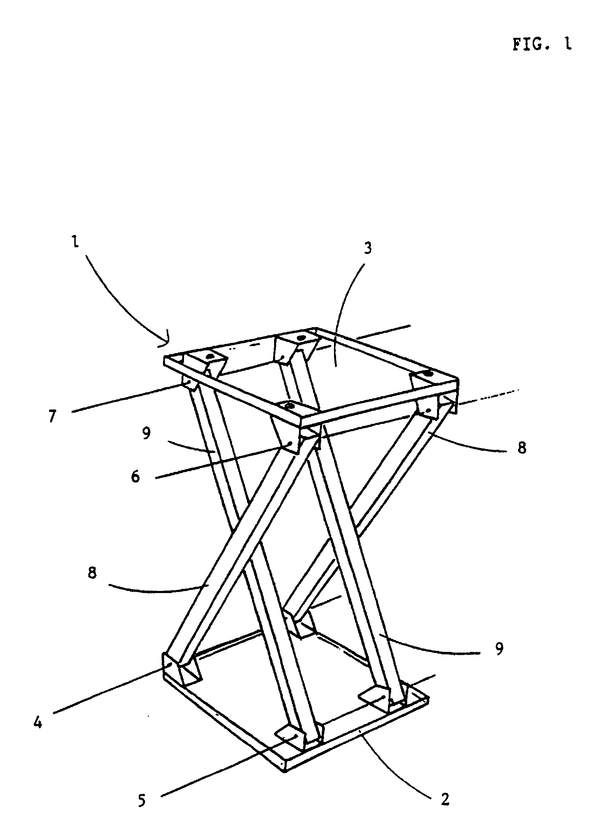

The device shown in fig. 1 contains the two structural components 2 and 3, in which case component 2 is equipped with two hinge shafts 4 and 5 respectively, which are positioned in continuation of each other in pairs, and component 3 in continuation of hinge shafts 6 and 7.

Hinge shafts 4 and 6 are connected to each other by means of connecting rods 8 and hinge shafts 5 and 7 are connected to each other by means of connecting rods 9. In the neutral position, the planes of structural components 2 and 3 will run parallel to each other.

Although the distances between hinge shafts 4 and 5, respectively 6 and 7 in figure 1, are identical, this is not strictly necessary. In the event the distances are not identical, the tilting movement, which structural components 2 and 3 make in relation to each other when the components move sideways to a certain extent, are of course different than in the event the distances are identical.

As mentioned above, connecting rods 8 can consist of hydraulic cylinders in either a pneumatic or hydraulic version.

The possibility also exists of installing hinge shafts 4 and 5 in such a manner that they can be moved in respect to structural component 2, like in slits for example (not indicated). The hinge shafts can then be pushed or pulled to a certain end-position by means of springs. The same, of course, can be done for hinge shafts 6 and 7, which are installed to structural component 3.

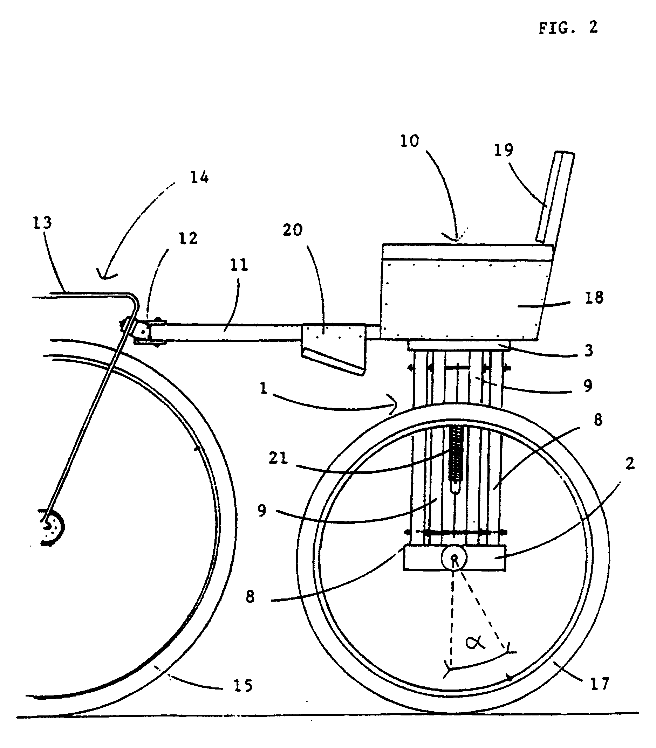

Figures 2 through 5 show the application of device 1 for bicycle cart 10. The cart is connected to luggage rack 13 of bicycle 14 by means of connecting arm 11 and universal joint 12; only part of rear wheel 15 is shown.

Axle 16 of wheels 17 of bicycle cart 10 is connected by means of structural component 2 of device 1; child-seat 18, its backrest 19 and its footrest 20 are connected to structural component 3.

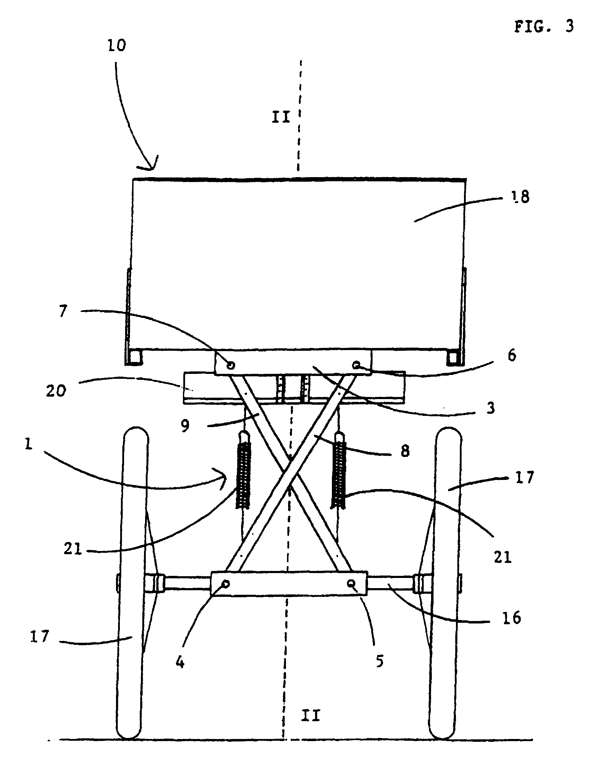

Tension springs 21 are connected to connecting rods 8 and 9 of device 1, due to which the structural components are maintained in the neutral position in relation to each other, as is shown in detail in figure 3. The tension springs prevent the bicycle cart 10 from shifting from one position to another in an undesirable manner. Tension springs 21 will also contribute to reinforcement of the entire vehicle.

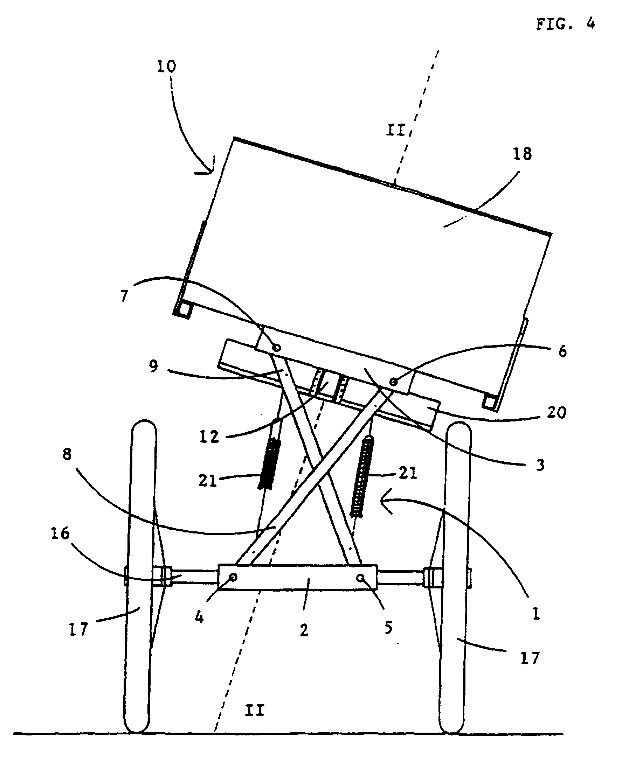

Universal joint 12 is connected to luggage rack 13 in such a manner that when bicycle 14 is in a tilted position, such as when taking a turn, child seat 18 of the bicycle cart will also tilt, as fig. 4 shows in detail. The plane on which bicycle 14 is positioned in this case and the centre line of universal joint 12 are indicated by line II-II. Upward and downward and left and right steering movements of bicycle 14 can be reproduced without any problems by bicycle cart 10 thanks to universal joint 12. A universal joint in the sense of the invention is a joint (12) as shown in Figures 2, 4 and 5 with two transverse axes.

As figure 4 shows in detail, the movement of structural component 3 in relation to component 2 can compensate better for the centrifugal force exerted on the bicycle cart, such as when taking a turn, and, to a large extent, prevent the cart from tipping over. Due to this, the child seat can also remain higher above the road surface than would otherwise be the case. The weight of the bicycle cart will also be distributed more evenly to both wheels.

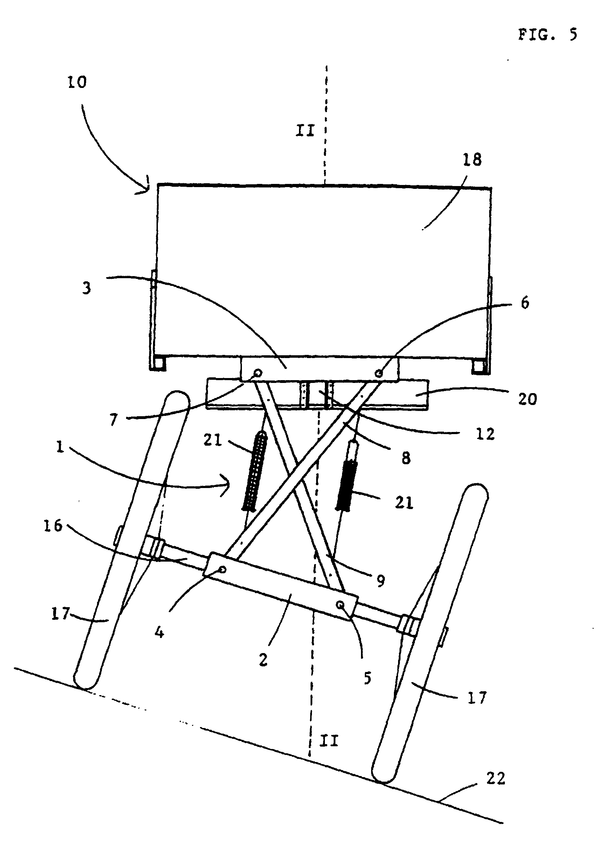

Figure 5 shows the position of the bicycle cart when the bicycle is ridden on road surface 22, which slopes transversely. In this case the bicycle is positioned in vertical plane II-II. Universal joint 12 ensures that child seat 18 will be in normal position, to a large extent, preventing bicycle cart 10 from tipping over. The child in the seat will also remain in a comfortable position.

In fig. 2, structural components 2 and 3 and connecting rods 8 and 9 are positioned on vertical and horizontal planes respectively. However, it is also possible to rotate the device at an angle K so it forms an angle with the vertical plane. Due to this, wheel axle 16 in the configuration shown in figure 4 will also perform a twist on its plane and wheels 17 will move into the curve. This can be especially important for application of the device for motor vehicles.

In the case of a three-wheeled vehicle of which the front wheel can be steered, this wheel can, for example, be connected to structural component 3 and both rear wheels with structural component 2.

It will be clear that only a few possible types of implementation of a device according to the invention have been presented in the drawing and described above, and that many changes can be made without departing from the invention, as has been indicated in the claims below.

## Claims

1. A vehicle comprising a stabiliser device for both static and dynamic stabilisation of an upper structural component (3) and a lower structural component (2) of the vehicle, said lower structural component (2) being connected to wheel suspension units, which stabiliser device contains at minimum two connecting rods (8, 9) which are connected in a hinged manner with said upper and lower structural components (2, 3), in which the hinge shafts (4-7) of the structural components (2, 3) opposite from each other are connected to each other by said connecting rods (8, 9) in such a manner that said connecting rods (8, 9) cross each other in vertical planes parallel to the wheel axle (16),
**characterised in that** the upper structural component (3) is connected to a steering arm (11) extending in the driving direction of the vehicle such that a tilting movement of said steering arm (11) about its longitudinal axis results in the tilting of the upper structural component (3) in relation to the lower one (2).

2. A vehicle according to claim 1, with the characteristic that at least two sets of connecting rods (8,9) are present, which are positioned on parallel planes.

3. A vehicle according to claim 1 or 2, with the characteristic that the structural components (2, 3) are maintained in position parallel with each other by means of tension springs (21).

4. A vehicle according to claim 4 with the characteristic that the structural components (2, 3) are connected to each other by means of a hydraulic cylinder, which is steered by the means connected to the steering device.

5. A vehicle according to one of the claims above, with the characteristic that the plane which is perpendicular to the hinge shafts (4-7) to which two connecting rods (8, 9) are connected that cross each other form an angle (K) with the vertical plane.

6. A vehicle according to one of the claims above, with the characteristic that the connecting rods (8,9) consist of hydraulic cylinders.

7. A vehicle according to one of the claims above, with the characteristic that the hinge shafts (4-7), which make the connection between the structural components (2,3) and the connecting rods (8,9), can be moved over a certain distance in relation to the structural components (2,3), perpendicular to their longitudinal direction, and can be pushed or pulled to a certain end position by means of a spring.

8. A vehicle according to claim 1 or 2, with the characteristic that provisions are installed to fasten the connecting rods crossing each other (8,9) in the position desired in relation to each other.

## Patentansprüche

1. Ein Fahrzeug, das eine Stabilisierungseinrichtung für sowohl die statische als auch die dynamische Stabilisierung einer Oberkonstruktion (3) und einer Unterkonstruktion (2) des Fahrzeugs enthält, wobei die genannte Unterkonstruktion (2) mit den Radaufhängungen verbunden ist und diese Stabilisierungseinrichtung mindestens zwei Verbindungsstangen (8, 9) aufweist, die gelenkartig mit den genannten Unter- und Oberkonstruktionen (2, 3) verbunden sind, an welchen die einander gegenüberliegenden Gelenkstücke (4-7) der tragenden Konstruktionen (2, 3) durch die genannten Verbindungsstangen (8, 9) auf eine solche Weise miteinander verbunden sind, dass sich die genannten Verbindungsstangen (8, 9) in vertikalen Ebenen parallel zur Radachse (16) kreuzen, **dadurch gekennzeichnet, dass** die Oberkonstruktion (3) mit einem Lenkhebel (11) verbunden ist, der sich so in Fahrtrichtung des Fahrzeugs bewegen lässt, dass eine Schwenkbewegung des besagten Lenkarms (11) um seine Längsachse in einer Neigung der Oberkonstruktion (3) relativ zur Unterkonstruktion (2)resultiert.

2. Ein Fahrzeug gemäß Anspruch 1, **dadurch gekennzeichnet, dass** mindestens zwei Garnituren von Verbindungsstangen (8,9) vorhanden sind, die in zueinander parallelen Ebenen angeordnet sind.

3. Ein Fahrzeug gemäß Anspruch 1 oder 2, **dadurch gekennzeichnet, dass** die Konstruktionsteile (2, 3) mit Hilfe von Spannfedern (21) in einer zueinander parallelen Stellung gehalten werden.

4. Ein Fahrzeug gemäß Anspruch 4, **dadurch gekennzeichnet, dass** die Konstruktionsteile (2, 3) mit Hilfe eines Hydraulikzylinders miteinander verbunden sind, der über eine mit der Lenkungsanlage gekoppelte Einrichtung gesteuert wird.

5. Ein Fahrzeug gemäß einem der vorgenannten Ansprüche, **dadurch gekennzeichnet, dass** die Ebene senkrecht zu den Gelenkachsen (4-7), an denen die beiden sich kreuzenden Verbindungsstangen (8, 9) befestigt sind, einen Winkel (K) mit der Vertikalebene einschließt.

6. Ein Fahrzeug gemäß einem der vorgenannten Ansprüche, **dadurch gekennzeichnet, dass** die Verbindungsstangen (8,9) als Hydraulikzylinder ausgeführt werden.

7. Ein Fahrzeug gemäß einem der vorgenannten Ansprüche, **dadurch gekennzeichnet, dass** die Gelenkachsen (4-7), die die Verbindung zwischen den Konstruktionsteilen (2,3) und den Verbindungsstangen (8,9) herstellen, in Bezug auf die Konstruktionsteile (2,3) und quer zu ihrer Längsausrichtung über eine bestimmte Strecke beweglich sind und mit Hilfe einer Feder in eine bestimmte Endposition gedrückt oder gezogen werden können.

8. Ein Fahrzeug gemäß Anspruch 1 oder 2, **dadurch gekennzeichnet, dass** Hilfseinrichtungen eingebaut sind, um die sich kreuzenden Verbindungsstangen (8,9) in der gewünschten Stellung zueinander zu fixieren.

## Revendications

1. Un véhicule comportant un stabilisateur de stabilisation statique et dynamique se composant d'un élément de structure supérieur (3) et d'un élément de structure inférieur (2), ledit élément de structure inférieur (2) étant connecté aux suspensions des roues, le stabilisateur en question comportant au minimum deux bielles (8,9) qui sont reliées de manière articulée avec lesdits éléments de structure supérieur et inférieur (2,3), dans lesquels les arbres d'articulation (4-7) des éléments de structure (2,3) placés en opposition sont connectés entre eux par lesdites bielles (8,9) de sorte que lesdites bielles (8,9) se croisent sur des plans verticaux parallèlement à l'axe des roues (16), **caractérisé par le fait que** l'élément de structure supérieur (3) est connecté à un bras de direction (11) installé dans le sens de la marche du véhicule de sorte qu'un mouvement de déversement dudit bras de direction (11) sur son axe longitudinal entraîne le basculement de l'élément de structure supérieur (3) en liaison avec l'inférieur (2).

2. Un véhicule correspondant à la revendication 1, **caractérisé par** la présence d'au moins deux jeux de bielles (8,9), placés sur des plans parallèles.

3. Un véhicule correspondant à la revendication 1 ou 2, **caractérisé par le fait que** les éléments de structure (2,3) sont maintenus parallèlement l'un à l'autre au moyen de ressorts de tension (21).

4. Un véhicule correspondant à la revendication 4, **caractérisé par le fait que** les éléments de structure (2,3) sont connectés l'un à l'autre au moyen d'un vérin hydraulique qui est actionné par l'objet connecté à l'appareil de commande.

5. Un véhicule correspondant à l'une des revendications ci-dessus, **caractérisé par le fait que** le plan perpendiculaire à l'arbre d'articulation (4-7) auquel deux bielles (8,9) sont connectées, se croisant l'une l'autre, forme un angle (K) avec le plan vertical.

6. Un véhicule correspondant à l'une des revendications ci-dessus, **caractérisé par le fait que** les bielles (8,9) sont constituées de vérins hydrauliques.

7. Un véhicule correspondant à l'une des revendications ci-dessus, **caractérisé par le fait que** les arbres d'articulation (4 à 7), qui assurent la connexion entre les éléments de structure (2,3) et les bielles (8,9) peuvent être déplacés sur une certaine distance en fonction des éléments de structure (2,3), perpendiculairement à leur direction longitudinale et peuvent être poussés ou tirés vers une certaine position finale au moyen d'un ressort.

8. Un véhicule, correspondant à la revendication 1 ou 2, **caractérisé par le fait que** les dispositifs sont installés pour attacher les bielles qui se croisent l'une l'autre (8,9) dans la position souhaitée l'une par rapport à l'autre.
